(19) Europäisches Patentamt
European Patent Office
Office européen des brevets

(11) **EP 3 515 781 B1**

(12) **EUROPÄISCHE PATENTSCHRIFT**

(45) Veröffentlichungstag und Bekanntmachung des Hinweises auf die Patenterteilung:
**08.01.2025   Patentblatt 2025/02**

(21) Anmeldenummer: **17783387.8**

(22) Anmeldetag: **17.08.2017**

(51) Internationale Patentklassifikation (IPC):
**B60W 30/09** (2012.01)

(52) Gemeinsame Patentklassifikation (CPC):
**B60W 30/09; G08G 1/166;** B60W 2300/12;
B60W 2520/105; B60W 2520/125; B60W 2710/207;
B60W 2720/106

(86) Internationale Anmeldenummer:
**PCT/EP2017/000995**

(87) Internationale Veröffentlichungsnummer:
**WO 2018/054517 (29.03.2018 Gazette 2018/13)**

(54) **VERFAHREN ZUM DURCHFÜHREN EINES AUSWEICHMANÖVERS MIT EINEM NUTZFAHRZEUG-GESPANN, SOWIE NOTAUSWEICHSYSTEM**

METHOD FOR PERFORMING AN EVASIVE MANOEUVRE WITH A UTILITY VEHICLE COMBINATION, AND EMERGENCY EVASION SYSTEM

PROCÉDÉ PERMETTANT D'EFFECTUER UNE MANOEUVRE D'ÉVITEMENT AVEC UN ATTELAGE DE VÉHICULE UTILITAIRE, AINSI QUE SYSTÈME D'ÉVITEMENT D'URGENCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.09.2016   DE 102016011282**

(43) Veröffentlichungstag der Anmeldung:
**31.07.2019   Patentblatt 2019/31**

(73) Patentinhaber: **ZF CV Systems Europe BV
1170 Brussels (BE)**

(72) Erfinder:
• **BARTH, Christoph
30451 Hannover (DE)**
• **DIECKMANN, Thomas
30982 Pattensen (DE)**

• **KALLENBACH, Stephan
30161 Hannover (DE)**
• **LÜLFING, Ralph-Carsten
30826 Garbsen (DE)**
• **PLÄHN, Klaus
30926 Seelze (DE)**

(74) Vertreter: **Rabe, Dirk-Heinrich
ZF CV Systems Hannover GmbH
Am Lindener Hafen 21
30453 Hannover (DE)**

(56) Entgegenhaltungen:
EP-A1- 2 311 707          DE-A1- 10 046 036
DE-A1- 10 231 556        DE-A1- 102008 003 205
DE-A1- 102008 019 194   DE-A1- 102013 001 229
DE-A1- 102013 009 252   DE-A1- 102014 017 594
US-A1- 2003 055 549      US-A1- 2012 101 701
US-A1- 2016 264 136

**Beschreibung**

Die Erfindung betrifft ein Verfahren zum Durchführen eines Ausweichmanövers mit einem Nutzfahrzeug-Gespann, sowie ein Notausweichsystem.

Notbremssysteme (AEBS) in Nutzfahrzeug-Gespannen dienen dazu, nach Erkennen einer drohenden Kollision mit einem Kollisionsobjekt eine Bremsung des Fahrzeug-Gespanns mit entsprechend gewählter Fahrzeug-Soll-Verzögerung einzuleiten. Dadurch soll das Fahrzeug-Gespann vor dem Erreichen des Kollisionsobjektes zum Stehen kommen, so dass die Wahrscheinlichkeit von Personenschäden gering gehalten wird. Die Abbremsung des Fahrzeug-Gespanns erfolgt dann außerdem derartig, dass Folgekollisionen vermieden werden.

Derartige Notbremssysteme sind darauf ausgelegt, dass die Notbremsung bei hohen Reibwerten, d.h. auf einer trockenen Straße durchgeführt wird. Liegen geringe Reibwerte vor, kann ein zusätzliches Lenkmanöver erforderlich sein, um dem Kollisionsobjekt zusätzlich auszuweichen und dadurch einen Auffahrunfall zu vermeiden.

In EP 2 240 354 ist ein Verfahren zur Kollisionsvermeidung beschrieben, wobei vorgesehen ist, nach Erkennen einer drohenden Kollision insbesondere ein Bremssystem mit Steuersignalen anzusteuern, um eine Kollision zu vermeiden. Lässt sich eine Kollision durch eine Bremsung nicht mehr vermeiden, kann durch einen aktiven Eingriff in die Lenkung auch ein automatisiertes Ausweichmanöver ausgeführt werden.

Nachteilig hierbei ist, dass bei der Durchführung des automatisierten Ausweichmanövers die Stabilität des Fahrzeug-Gespanns nicht berücksichtigt wird.

Gemäß EP 2 268 515 ist eine Stabilitätsregelung für ein Nutzfahrzeug vorgesehen, wobei ein für eine Umkippverhinderung verwendetes Ist-Gierverhalten aus einer gemessenen Querbeschleunigung und ein Soll-Gierverhalten aus einem aktuellen Lenkwinkel ermittelt wird, um die Verwendung eines zusätzlichen Gierratensensors zu vermeiden.

Gemäß EP 2 644 464 ist eine Stabilitätsregelung für ein Nutzfahrzeug-Gespann gezeigt, die eine durch eine Schlingerbewegung verursachte Pendelbewegung des Fahrzeug-Gespanns ermittelt und bei Feststellen einer Pendelbewegung eine Bremssteuerung ausführt sowie ein Motordrehmoment begrenzt.

Gemäß DE 10 2005 018 486 ist ein Verfahren zum Unterstützen des Fahrers bei einem Ausweichmanöver beschrieben, wobei dazu eine Ausweichtrajektorie ermittelt wird, entlang derer das Fahrzeug für das Ausweichmanöver bewegt werden soll. Weicht das Fahrzeug von dieser Ausweichtrajektorie ab, wird ein der Abweichung entgegenwirkendes Giermoment an den Rädern erzeugt, z.B. durch Einzelradbremsungen, so dass sich das Fahrzeug wieder in Richtung der Ausweichtrajektorie bewegt und diese abgefahren werden kann.

Gemäß DE 103 42 865 A1 ist vorgesehen bei Auftreten von Schlingerbewegungen des Fahrzeug-Gespanns, einen fahrerunabhängigen Lenkeingriff durchzuführen sowie das Antriebsmoment des Fahrzeug-Gespanns zu reduzieren, wenn eine Ist-Gierrate von einer Soll-Gierrate abweicht, um das Fahrzeug-Gespann zu stabilisieren.

Auch in DE 10 2005 028 787 ist ein System zum Stabilisieren eines Fahrzeug-Gespanns gezeigt. Dabei ist vorgesehen bei Erkennen einer kritischen Anhänger-Schwingung einen automatisierten Eingriff in die Lenkung vorzunehmen.

DE 10 2012 22 862 zeigt ebenfalls ein Verfahren zum Stabilisieren eines Fahrzeug-Gespanns, wobei bei Erkennen einer Schlingerbewegung ein fahrerunabhängiger Lenkeingriff vorgenommen wird, falls ein erster Schwellwert durch eine die Schlingerbewegung charakterisierende Schlingergröße überschritten wird. Weiterhin ist bei Überschreiten eines zweiten Schwellwertes, der höher als der erste Schwellwert ist, auch ein Bremseingriff vorgesehen.

Aus dem Dokument US2012101701A1 ist ein Kollisionsvermeidungssystem in einem Trägerfahrzeug bekannt, das kombiniertes automatisches Bremsen und Lenken verwendet. Das Kollisionsvermeidungssystem definiert Schwellenwerte, die eine Zeit bis zur Kollision mit einem Zielfahrzeug durch das Host-Fahrzeug identifizieren. Das Kollisionsvermeidungssystem bietet ein vollautomatisches Kollisionsvermeidungsbremsen, wenn die Zeit bis zur Kollision kleiner als ein Schwellenwert ist und die Spur neben dem eigenen Fahrzeug nicht frei ist. Das Kollisionsvermeidungssystem stellt sowohl ein automatisches Lenken als auch ein Bremsen des Host-Fahrzeugs bereit, wenn die Zeit bis zur Kollision kleiner als ein anderer Schwellenwert ist und die Spur neben dem Host-Fahrzeug frei ist.

Das Dokument DE102008003205A1 betrifft eine Vorrichtung zur Kollisionsvermeidung, insbesondere für Nutzfahrzeuge, umfassend eine Eingabeeinheit zur Eingabe von verkehrssituationsbezogenen Kriterien und zur Ermittlung von verkehrssituationsbezogenen Schwellenwerten, eine Erfassungseinheit zur Erfassung von Objekten im Umfeld des Fahrzeuges, eine Messeinheit zur Bestimmung des Bewegungszustandes des eigenen Fahrzeuges, eine Steuereinheit zur Verarbeitung der von der Eingabeeinheit, der Erfassungseinheit und der Messeinheit erhaltenen Informationen und zur Erzeugung von Steuerungssignalen zur Ansteuerung von den Bewegungszustand des Fahrzeugs betreffenden Baueinheiten und eine Ausgabeeinheit zur Ausgabe der erzeugten Steuerungssignale.

Es ist Aufgabe der Erfindung, ein Verfahren zum Durchführen eines Ausweichmanövers mit einem Nutzfahrzeug-Gespann anzugeben, mit dem eine drohende Kollision auch bei niedrigen Reibwerten zuverlässig und sicher vermieden werden kann bei gleichzeitiger Erhaltung der Fahrzeugstabilität des Nutzfahrzeug-Gespanns zum Verhindern von sekundären Unfallfolgen. Weiterhin ist Aufgabe der Erfindung, ein Notausweichsystem bereitzustellen.

Diese Aufgabe wird durch ein Verfahren nach Anspruch 1 sowie ein Notausweichsystem nach Anspruch 16 gelöst. Bevorzugte Weiterbildungen sind in den Unteransprüchen angegeben.

Erfindungsgemäß ist demnach vorgesehen, nach dem Erkennen einer drohenden Kollision eines Nutzfahrzeug-Gespanns mit einem Kollisionsobjekt und nachdem eine Ausweichtrajektorie ermittelt wurde, entlang derer das Nutzfahrzeug-Gespann automatisiert bewegt wird, um dem Kollisionsobjekt in einem Ausweichmanöver auszuweichen, eine aktuelle Querbeschleunigung des Nutzfahrzeug-Gespanns zu ermitteln und in Abhängigkeit davon einen Soll-Lenkwinkel und eine Fahrzeug-Soll-Verzögerung zu begrenzen, falls die aktuelle Querbeschleunigung eine maximale Querbeschleunigung und vorzugweise die Fahrzeug-Soll-Verzögerung eine maximale Fahrzeug-Soll-Verzögerung, die vorzugsweise von der maximalen Querbeschleunigung abhängig ist, überschreiten.

Unter einer automatisierten Bewegung des Fahrzeug-Gespanns entlang der Ausweichtrajektorie wird hierbei verstanden, dass aktiv in die Lenkung und die Bremsung eingegriffen wird, indem der Soll-Lenkwinkel und die Fahrzeug-Soll-Verzögerung automatisiert vorgegeben werden, um der ermittelten Ausweichtrajektorie zu folgen. Dadurch wird das Fahrzeug-Gespann von einer Ausgangs-Fahrspur, auf der sich das Nutzfahrzeug-Gespann vor dem Ausweichmanöver befindet, auf eine Ziel-Fahrspur bewegt, die als Fahrspur für den Stillstand des Nutzfahrzeug-Gespanns vorgegeben wird.

Dadurch kann vorteilhafterweise bereits erreicht werden, dass das Ausweichmanöver zusätzlich unter Berücksichtigung von Stabilitätsanforderungen durchgeführt wird, so dass verhindert werden kann, dass während des Ausweichmanövers durch einen zu großen Soll-Lenkwinkel das Fahrzeug-Gespann beginnt zu kippen oder durch eine zu hohe Fahrzeug-Soll-Verzögerung ein Verlust der Richtungsstabilität bei Überschreiten einer Kraftschlussgrenze auftritt und somit ein Ausbrechen durch Untersteuern oder Übersteuern des Zugfahrzeuges oder ein Ausbrechen bzw. Einknicken des Anhängers verursacht wird.

Auf diese Weise können vorteilhafterweise nach einem Erkennen einer Kollision nicht nur der primär drohende Auffahrunfall sondern auch daraus folgende sekundäre Unfallfolgen verhindert werden.

Als Ausweichtrajektorie wird hierbei zu Beginn des Ausweichmanövers zunächst eine initiale Ausweichtrajektorie ermittelt und während des Ausweichmanövers werden zyklisch, wenn das Fahrzeug-Gespann vorab definierte Zwischenpunkte erreicht, aktualisierte Ausweichtrajektorien ermittelt. Die aktualisierte Ausweichtrajektorie gleicht hierbei vorteilhafterweise Abweichungen von der initialen Ausweichtrajektorie aus, die insbesondere durch die Begrenzung des Soll-Lenkwinkels auftreten.

Die Ausweichtrajektorien werden vorzugsweise jeweils unter Annahme eines Polynoms fünften Grades in Abhängigkeit von Randbedingungen ermittelt, wobei die Randbedingungen derartig festgelegt werden, dass das Nutzfahrzeug-Gespann beim Abfahren der jeweiligen Ausweichtrajektorie über eine Ausweichdistanz dem Kollisionsobjekt ausweicht, ohne dabei das Kollisionsobjekt zu berühren, d.h. es wird nach der Ausweichdistanz zumindest ein Querversatz neben dem Kollisionsobjekt eingehalten, wenn sich das Nutzfahrzeug-Gespann auf der Ziel-Fahrspur befindet.

Die Ausweich-Distanz gibt hierbei den Abstand zwischen dem Kollisionsobjekt und dem Nutzfahrzeug-Gespann ab dem Auslösen des Ausweichmanövers an, d.h. den Zeitpunkt, ab dem von einem Notbremssystem (AEBS) eine Warnung für eine drohende Kollision ausgegeben wird. Der Querversatz ist senkrecht dazu ausgerichtet. Hierbei kann ein kartesisches Koordinatensystem angenommen werden, in dem die Ausweich-Distanz in x-Richtung bzw. auf der x-Achse, die beispielsweise parallel zu der Ausgangs-Fahrspur oder der Ziel-Fahrspur ausgerichtet ist, und in dem der Querversatz in y-Richtung bzw. auf der y-Achse aufgetragen ist. Eine Fahrzeug-x-Position wird somit durch die x-Koordinate und eine Fahrzeug-y-Position durch die y-Koordinate in diesem kartesischen Koordinatensystem angegeben.

Dadurch.kann eine Kollision zuverlässig vermieden werden, wobei durch das zusätzliche Lenkmanöver auch bei geringen Reibwerten von beispielsweise $\mu <= 0,5$, d.h. insbesondere auf einer nassen Straße, ein Auffahrunfall verhindert werden kann.

Der Soll-Lenkwinkel für die automatisierte Lenkvorgabe wird ständig in Zeitintervallen ermittelt und folgt vorzugsweise aus einer zweiten Ableitung der Funktion der jeweils zuletzt ermittelten Ausweichtrajektorie an der aktuellen Fahrzeug-x-Position, d.h. aus einer Krümmung der jeweiligen Ausweichtrajektorie, falls die Querbeschleunigung die maximale Querbeschleunigung nicht überschreitet. Wird die maximale Querbeschleunigung jedoch überschritten, wird der Soll-Lenkwinkel begrenzt, wobei der Soll-Lenkwinkel dazu proportional zur maximalen Querbeschleunigung und/oder umgekehrt proportional zur aktuellen Fahrzeug-Geschwindigkeit gewählt wird.

Weiterhin wird vorzugsweise auch die aktuelle Querbeschleunigung aus der zweiten Ableitung der Funktion der jeweiligen Ausweichtrajektorie an der aktuellen Fahrzeug-x-Position ermittelt.

Die aktuelle Fahrzeug-x-Position wird zur Bestimmung des Soll-Lenkwinkels und der Querbeschleunigung vorzugsweise durch Odometrie bestimmt, d.h. es wird die vor einem Zeitintervall gültige vorherige Fahrzeug-x-Position genommen und anhand der Bewegung des Fahrzeug-Gespanns abgeschätzt, an welcher Fahrzeug-x-Position sich das Fahrzeug-Gespann zum aktuellen Zeitpunkt befindet. Dazu wird insbesondere auf Informationen eines Stabilitäts-Kontrollsystems (ESC) zurückgegriffen, das eine aktuelle Gierrate des Fahrzeug-Gespanns im Schwerpunkt ermittelt. Daraus kann durch Integration ein aktueller Gierwinkel ermittelt werden. Aus dem aktuellen Gierwinkel und einer aktuellen Fahrzeug-Geschwindigkeit folgt, in welche Richtung und wie weit sich das Fahrzeug-Gespann ab der vorherigen Fahrzeug-x-Position bewegt hat. Daraus folgt die aktuelle Fahrzeug-x-Position.

Somit kann vorteilhafterweise ohne einen zusätzlichen Positionssensor, beispielsweise ein Satelliten-Navigations-System, insbesondere GPS, die aktuelle Fahrzeug-x-Position aus ohnehin im Fahrzeug-Gespann gemessenen Informationen ermittelt werden. Zudem können die aktuelle Gierrate und die aktuelle Fahrzeug-Geschwindigkeit mit sehr hoher Genauigkeit und Schnelligkeit ermittelt werden und eine Positionsbestimmung wird nicht durch die Umgebung des Fahrzeug-Gespanns beeinflusst, z.B. Tunneldurchfahrten bei einem GPS. Lediglich ergänzend kann, falls verfügbar, zur Plausibilisierung auf Daten eines Satelliten-Navigations-Systems zurückgegriffen werden.

Um die Begrenzung des Soll-Lenkwinkels bei Überschreiten der maximalen Querbeschleunigung auszugleichen, die zwangsläufig zu einem Verlassen der initialen Ausweichtrajektorie führt, wird während der Durchführung des Ausweichmanövers an den Zwischenpunkten die aktualisierte Ausweichtrajektorie wie oben beschrieben berechnet. Ab dem Zwischenpunkt wird dann der Soll-Lenkwinkel sowie die Querbeschleunigung anhand der aktualisierten Ausweichtrajektorie bzw. deren zweiter Ableitung an der aktuellen Fahrzeug-x-Position ermittelt.

Dadurch kann vorteilhafterweise erreicht werden, dass während des Ausweichmanövers ab dem Zwischenpunkt wieder eine exakte Berechnung des Soll-Lenkwinkels und der aktuellen Querbeschleunigung erfolgen kann. Die Zuverlässigkeit und die Sicherheit des Ausweichmanövers steigen.

Als Randbedingungen werden für die aktualisierte Ausweichtrajektorie der Zwischenpunkt, dessen Koordinaten durch Odometrie ermittelt werden, und ein diesem zugeordneter Ausweichpunkt, festgelegt und die Fahrzeugausrichtung an diesen Punkten berücksichtigt. Dazu kann der Ausweichpunkt in x-Richtung beispielsweise derartig gegenüber dem Zwischenpunkt in Fahrtrichtung des Nutzfahrzeug-Gespanns nach hinten verschoben werden, dass der Abstand zwischen dem Zwischenpunkt und dem Ausweichpunkt der Ausweich-Distanz entspricht.

Durch das Verschieben des Ausweichpunktes zur Berechnung der aktualisierten Ausweichtrajektorie wird vorteilhafterweise erreicht, dass keine numerisch bedingte, große Lenkdynamik auftritt, wenn das Fahrzeug-Gespann in den Bereich des jeweiligen Ausweichpunktes gelangt. Dies kann beispielsweise dann auftreten, wenn das Fahrzeug-Gespann die Ausweich-distanz erreicht hat und sich das Fahrzeug- Gespann an diesem Punkt nicht genau auf einem vorab festgelegten End-Punkt befindet. In dem Fall wird numerisch bedingt ein hoher Soll-Lenkwinkel berechnet, um diesen dennoch zu erreichen. Dies gilt es zu vermeiden, indem ein in Fahrtrichtung des Nutzfahrzeug-Gespanns nach hinten verschobener Ausweichpunkt gewählt wird.

Die Verschiebung des Ausweichpunktes bzw. der Ausweichpunkte können zudem derartig gewählt werden, dass die aus dem jeweiligen Zwischenpunkt und dem Ausweichpunkt folgende aktualisierte Ausweichtrajektorie von der initialen Ausweichtrajektorie um weniger als eine Toleranz abweicht und die aktualisierte Ausweichtrajektorie ausgehend von der initialen Ausweichtrajektorie lediglich in y-Richtung vom Kollisionsobjekt weg in Richtung der Ziel-Fahrspur abweicht.

Dadurch kann vorteilhafterweise vermieden werden, dass das Fahrzeug-Gespann dem Kollisionsobjekt kurz vor oder beim Passieren aufgrund der Neuberechnung zu nahe kommt. Zudem kann das Fahrzeug-Gespann dadurch nach dem Passieren des Kollisionsobjektes schneller in eine gerade Stellung, d.h. parallel zur Ziel-Fahrspur, ausgerichtet werden.

Während der Durchführung des Ausweichmanövers können zwischen drei und zwanzig Zwischenpunkte bzw. Neuberechnungen gewählt werden. Dadurch kann die Bestimmung des Soll-Lenkwinkels und der aktuellen Querbeschleunigung sehr genau erfolgen.

Nach dem Erreichen des Kollisionsobjektes, d.h. nach Abfahren der Ausweichdistanz und dem Erreichen der Ziel-Fahrspur können auch noch weitere aktualisierte Ausweichtrajektorien ermittelt werden, wobei der Ausweichpunkt ab Erreichen der Ausweichdistanz festgehalten und nicht mehr in x-Richtung verschoben wird. Durch diese Neuberechnungen kann erreicht werden, dass das Fahrzeug-Gespann durch weitere Lenkbewegungen parallel zur Ziel-Fahrspur ausgerichtet wird.

Vorzugsweise wird die maximale Querbeschleunigung zur Begrenzung des Soll-Lenkwinkels aus einer Kippgrenze ermittelt, wobei die Kippgrenze von einer Vorrichtung zur Umkippverhinderung im Nutzfahrzeug-Gespann vorgegeben wird, die Teil des Stabilitäts-Kontrollsystems ist. Die Kippgrenze kann beispielsweise konstant, z.B. $3m/s^2$, sein oder von der Vorrichtung zur Umkippverhinderung fahrzeugabhängig ermittelt werden, wobei beispielsweise eine Beladung des Fahrzeug-Gespanns und die Fahrzeug-Geschwindigkeit berücksichtigt werden können.

Vorzugsweise wird die Fahrzeug-Soll-Verzögerung während des Ausweichmanövers zum Abbremsen des Nutzfahrzeug-Gespanns derartig gewählt, dass das Fahrzeug-Gespann mit einer Gespann-Hinterseite bei der oder in Fahrtrichtung nach der Ausweich-Distanz zum Stehen kommt. Dadurch wird vorteilhafterweise erreicht, dass das Nutzfahrzeug-Gespann in der Ausgangs-Fahrspur Platz für den nachfolgenden Verkehr macht und nicht hinter dem Kollisionsobjekt hinausragt und/oder dabei mehrere Fahrspuren belegt. Das elektronische Bremssystem des Nutzfahrzeug-Gespanns wird dabei derartig angesteuert, dass das Nutzfahrzeug-Gespann ab Beginn des Ausweichmanövers frühestens nach der Ausweichdistanz zuzüglich einer Gespann-Länge zum Stehen kommt.

Die an das elektronische Bremssystem vorgegebene Fahrzeug-Soll-Verzögerung wird hierbei derartig begrenzt, dass eine Gesamtbeschleunigung des Fahrzeug-Gespanns, die aus einer vektoriellen Summe aus Längsbeschleunigung, d.h. Fahrzeug-Soll-Verzögerung, und Querbeschleunigung folgt, eine maximale Gesamtbeschleunigung nicht überschreitet. Dies kann beispielsweise durch Messung der Gesamtbeschleunigung und Vergleich mit der maximalen Gesamtbeschleunigung erfolgen. Wird die maximale Gesamtbeschleunigung erreicht oder überschritten, wird die angeforderte Fahrzeug-Soll-Verzögerung auf die maximale Fahrzeug-Soll-Verzögerung begrenzt. Die maximale Fahrzeug-Soll-Verzögerung wird hierbei in Abhängigkeit der maximalen Gesamtbeschleunigung, die vorzugsweise von einem Reibwert, insbesondere $\mu <= 0,5$, d.h. für nasse Fahrbahnen, abhängig ist, und der aktuellen Querbeschleunigung festgelegt.

Alternativ kann auch die angeforderte Fahrzeug-Soll-Verzögerung derartig direkt überwacht werden, dass lediglich Fahrzeug-Soll-Verzögerungen an das elektronische Bremssystem angefordert werden können, die kleiner oder gleich der von der maximalen Gesamtbeschleunigung abhängigen maximalen Fahrzeug-Soll-Verzögerung sind. Eine Anforderung einer höheren Fahrzeug-Soll-Verzögerung wird somit von vornherein unterbunden.

Vorteilhafterweise wird dadurch erreicht, dass eine Fahrzeug-Soll-Verzögerung lediglich dann vom elektronischen Bremssystem angefordert werden kann, wenn die maximale Gesamtbeschleunigung durch die aufgrund der angeforderten Lenkung mit dem Soll-Lenkwinkel bewirkte Querbeschleunigung nicht bereits erreicht oder überschritten wird. Die Höhe der anforderbaren Fahrzeug-Soll-Verzögerung richtet sich somit danach, wie hoch die Gesamtbeschleunigung des Fahrzeug-Gespanns aufgrund der Lenkanforderung bereits ist.

Dadurch wird der Lenkung vorteilhafterweise eine höhere Priorität eingeräumt als der Bremsung. D.h. das Ausweichmanöver erfolgt unter der Bedingung, dass dem Kollisionsobjekt primär auszuweichen ist und erst sekundär der Stillstand erreicht werden soll, um insbesondere zu gewährleisten, dass das Nutzfahrzeug-Gespann nicht mehrere Fahrspuren belegt und dadurch den nachfolgenden Verkehr, insbesondere in der Ausgangs-Fahrspur, stört.

Die Erfindung wird im Folgenden anhand der beiliegenden Zeichnung erläutert. Es zeigen:

Fig. 1          eine schematische Ansicht eines Nutzfahrzeug-Gespanns mit einem Notausweichsystem;

Fig. 2a,b,c     eine beispielhafte Darstellung eines Ausweichmanövers; und

Fig. 3, 4       Flussdiagramme zur Durchführung des erfindungsgemäßen Verfahrens.

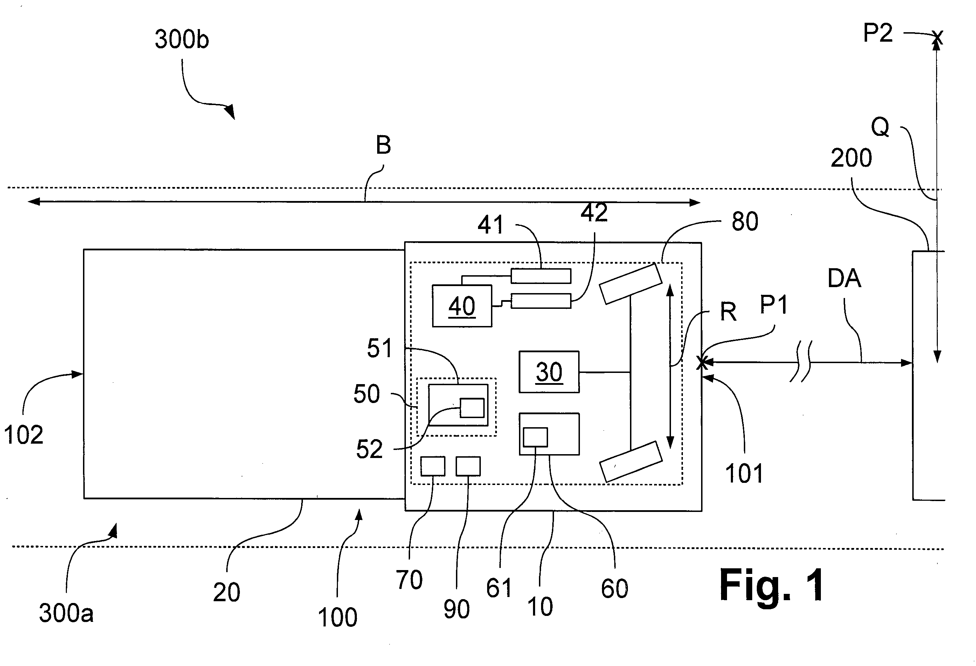

Gemäß Fig. 1 ist ein Nutzfahrzeug-Gespann 100 mit einer Zugmaschine als Zugfahrzeug 10 und einem Sattelauflieger als Anhänger 20 dargestellt. Alternativ kann das Nutzfahrzeug-Gespann 100 auch aus einem LKW mit einem Deichselanhänger ausgeführt sein. Im Zugfahrzeug 10 des Nutzfahrzeug-Gespanns 100 ist ein aktives Lenksystem 30, das ausgebildet ist, das Nutzfahrzeug-Gespann 100 automatisiert zu lenken, ein Notbremssystem 40 (AEBS), das ausgebildet ist, eine drohende Kollision K mit einem Kollisionsobjekt 200 vor dem eigenen Nutzfahrzeug-Gespann 100 z.B. mithilfe einer Kamera 41 und/oder einem Radar 42 zu erkennen, sowie ein Stabilitäts-Kontrollsystem 50 (ESC), das über eine ESC-Steuereinrichtung 51 eine Fahrdynamik des Nutzfahrzeug-Gespanns 100 kontrolliert und regelt, angeordnet. In der ESC-Steuereinrichtung 51 ist insbesondere eine Vorrichtung zur Umkippverhinderung 52 (RSC) vorgesehen, die durch einen Eingriff in das Antriebs- und Bremssystem 60 die Wahrscheinlichkeit eines Umkippens des Nutzfahrzeug-Gespanns 100 vermindern kann.

Weiterhin weist das Nutzfahrzeug-Gespann 100 ein elektronisches Bremssystem 60 (EBS) auf, mit dem gesteuert von einer EBS-Steuereinrichtung 61 ein automatisiertes Abbremsen des Nutzfahrzeug-Gespanns 100 erfolgen kann, wenn eine bestimmte Fahrzeug-Soll-Verzögerung zSoll angefordert wird. Die Fahrzeug-Soll-Verzögerung zSoll wird gemäß der erfindungsgemäßen Ausführung insbesondere von einer Notausweich-Steuereinrichtung 70 angefordert, die ausgebildet ist, bei Erkennen einer drohenden Kollision K mit dem Kollisionsobjekt 200 diesem auszuweichen, indem über das aktive Lenksystem 30 ein Soll-Lenkwinkel LSoll angefordert wird und gleichzeitig eine Fahrzeug-Soll-Verzögerung zSoll vorgegeben wird.

Das aktive Lenksystem 30, das Notbremssystem 40, das Stabilitäts-Kontrollsystem 50 und das elektronische Bremssystem 60 bilden somit ein Notausweichsystem 80 aus, das von der Notausweich-Steuereinrichtung 70 gesteuert wird und das bei einer drohenden Kollision K die Unfallfolgen vermindern kann, indem eine kombinierte Lenkung und Bremsung angefordert wird.

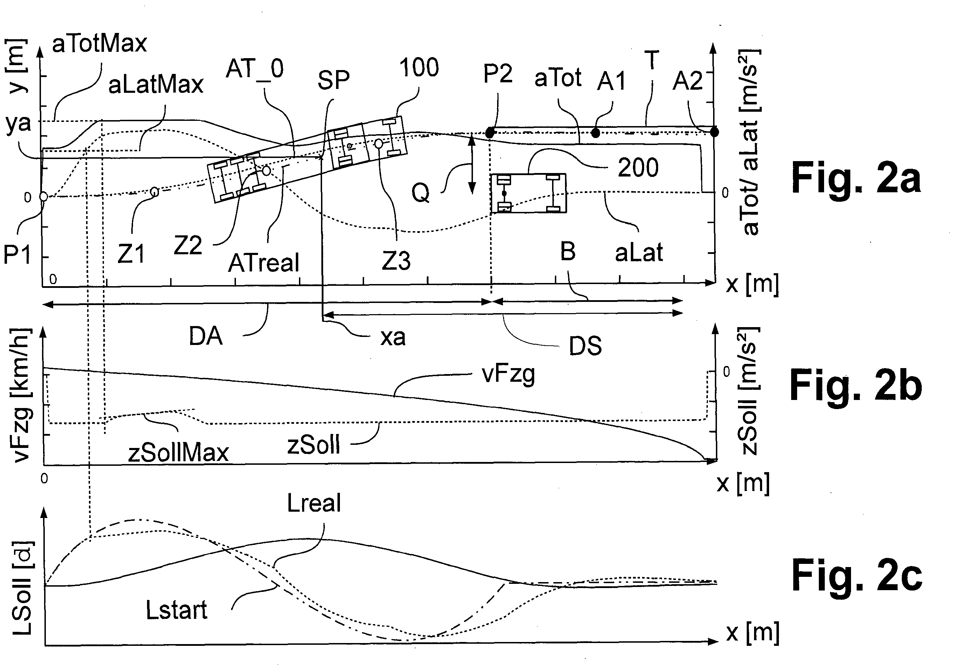

Zur Ausführung der kombinierten Lenkung und Bremsung wird von der Notausweich-Steuereinrichtung 70 nach Erkennen einer drohenden Kollision K zunächst eine initiale Ausweichtrajektorie AT_0 berechnet, entlang welcher das Nutzfahrzeug-Gespann 100 von einer Ausgangs-Fahrspur 300a auf eine Ziel-Fahrspur 300b geleitet werden soll, um dem Kollisionsobjekt 200 in einem Ausweichmanöver AWM auszuweichen. Eine beispielhafte initiale Ausweichtrajektorie AT_0 zeigt Fig. 2a als fein gestrichelte Linie.

Dazu wird ein Start-Punkt P1 auf der Ausgangs-Fahrspur 300a gewählt, der die Position einer Gespann-Vorderseite 101 des eigenen Nutzfahrzeug-Gespanns 100 zum aktuellen Zeitpunkt angibt. Der Start-Punkt P1 wird beispielsweise in den Ursprung eines kartesischen Koordinatensystems mit x-und y-Koordinaten gelegt, wobei die x-Achse die Längsrichtung und die y-Achse die Querrichtung bezüglich den Fahrspuren 300a, 300b angibt.

Weiterhin wird eine Ausweich-Distanz DA vom Start-Punkt P1 zum Kollisionsobjekt 200 ermittelt, beispielsweise vom Notbremssystem 40, wobei die Ausweich-Distanz DA angibt, ab wann das Notbremssystem 40 eine Fahrsituation als kritisch einstuft, d.h. eine drohende Kollision K erkannt und ein Ausweichmanöver AWM eingeleitet wird, wobei diese Ausweich-Distanz DA zwischen 30m und 40m liegt, um mit einer Lenkung und einer Bremsung noch ein sicheres Ausweichen ermöglichen zu können.

Außerdem wird ein Querversatz Q ermittelt, der den gewünschten Abstand zwischen dem eigenen Nutzfahrzeug-Gespann 100 und dem Kollisionsobjekt 200 nach dem Ausweichen angibt. Die Ausweich-Distanz DA und der Querversatz Q legen einen End-Punkt P2 auf der Ziel-Fahrspur 300b fest, mit dem zu Beginn des Ausweichmanövers AWM die initiale Ausweichtrajektorie AT_0 berechnet wird.

Zur Berechnung der initialen Ausweichtrajektorie AT_0 wird ein Polynom fünften Grades angenommen, d.h. eine Funktion f(x) mit einer ersten Ableitung f1 (x) und einer zweiten Ableitung f2(x):

$$f(x) = c5*x^5 + c4*x^4 + c3*x^3 + c2*x^2 + c1*x + c0$$

$$f1(x) = 5*c5*x^4 + 4*c4*x^3 + 3*c3*x^2 + 2*c2*x + c1$$

$$f2(x) = 20*c5*x^3 + 12*c4*x^2 + 6*c3*x + 2*c2$$

wobei f(x) die y-Koordinate und x die x-Koordinate angibt und ci Koeffizienten des Polynoms fünften Grades angeben, die den genauen Verlauf der initialen Ausweichtrajektorie AT_0 insbesondere zwischen dem Start-Punkt P1 und dem End-Punkt P2 festlegen.

Um die Koeffizienten ci zu ermitteln, werden die gegebenen Randbedingungen verwendet, d.h. f(0) = 0 für P1 und f(DA) = Q für P2. Weiterhin wird die Annahme getroffen, dass das Nutzfahrzeug-Gespann 100 am Start-Punkt P1 und am End-Punkt P2 geradeaus fährt, d.h. f1(0) = 0 für P1 und f1(DA) = 0 für P2,. Weiterhin wird die Annahme getroffen, dass die Krümmung der initialen Ausweichtrajektorie AT_0 am Start-Punkt P1 und am End-Punkt P2 ebenfalls Null, d.h. f2(0) = 0 für P1 und f2(DA) = 0 für P2.

Unter diesen Randbedingungen können die Koeffizienten ci durch Lösen eines linearen Gleichungssystems eindeutig bestimmt werden, wodurch die initiale Ausweichtrajektorie AT_0 zwischen dem Start-Punkt P1 und dem End-Punkt P2 festgelegt ist.

Nach Berechnung der initialen Ausweichtrajektorie AT_0 ist zu ermitteln, welcher Soll-Lenkwinkel LSoll nach jedem Zeitintervall dt an das aktive Lenksystem 30 zu senden ist, um der initialen Ausweichtrajektorie AT_0 zu folgen. Zu Beginn des Ausweichmanövers AWM erfolgt dies anhand der initialen Ausweichtrajektorie AT_0, für die sich der Soll-Lenkwinkel LSoll ergibt aus:

$$LSoll = vFzg * f2(xa) * LRatio * fStat,$$

wobei vFzg eine aktuelle Fahrzeug-Geschwindigkeit des Schwerpunkts SP angibt, f2(xa) die zweite Ableitung der initialen Ausweichtrajektorie AT_0 an einer aktuellen Fahrzeug-x-Position xa des Nutzfahrzeug-Gespanns 100, d.h. eine Krümmung der initialen Ausweichtrajektorie AT_0 im Punkt xa, LRatio eine Gesamtlenkübersetzung des Nutzfahrzeug-Gespanns 100 und fStat eine stationäre Übertragungsfunktion des Gierverhaltens des Nutzfahrzeug-Gespanns 100 darstellt, die aus einem Radstand R, der aktuellen Fahrzeug-Geschwindigkeit vFzg sowie einem Eigenlenkgradient LGrad ermittelt wird.

Die aktuelle Fahrzeug-x-Position xa wird hierbei durch Odometrie ermittelt aus einer vor einem Zeitintervall dt gültigen vorherigen Fahrzeug-x-Position xb, aus einem aktuellen Gierwinkel YawAng_a des eigenen Nutzfahrzeug-Gespanns 100 und der aktuellen Fahrzeug-Geschwindigkeit vFzg:

$$xa = xb + vFzg * cos(YawAng\_a) * dt.$$

Der aktuelle Gierwinkel YawAng_a folgt wiederum aus einer aktuellen Gierrate YawRate, die beispielsweise vom Stabilitäts-Kontrollsystem 50 gemessen wird, aus

$$YawAng\_a = YawAng\_b + YawRate * dt,$$

wobei YawAng_b einen vor dem Zeitintervall dt gültigen vorherigen Gierwinkel angibt.

D.h. zur Bestimmung der aktuellen Fahrzeug-x-Position xa werden keine weiteren Sensoren zur Positionsbestimmung verwendet, sondern lediglich auf Größen zurückgegriffen, die beispielsweise vom Stabilitäts-Kontrollsystem 50 bereits bestimmt und der Notausweich-Steuereinrichtung 70 des Notausweichsystems 80 zur Verfügung gestellt werden. Zur Plausibilisierung kann aber auch auf Daten eines Satelliten-Navigations-Systems 90, beispielsweise GPS, zurückgegriffen werden, um die aktuelle Fahrzeug-x-Position xa zu bestimmen.

Ein beispielhafter Lenkwinkel-Verlauf LStart, der zu Beginn des Ausweichmanövers AWM anhand der initialen Ausweichtrajektorie ATstart ermittelt wird, und den Soll-Lenkwinkel LSoll an den entsprechenden x-Positionen des Fahrzeug-Gespanns 100 anzeigt, ist in Fig. 2c als Strich-Punkt-Linie gezeigt. Dieser Lenkwinkel-Verlauf LStart wird zu Beginn eines Ausweichmanövers AWM angenommen.

Um während des Verlaufs des Ausweichmanövers AWM dafür zu sorgen, dass durch das Ausweichmanöver AWM keine anderen Unfälle induziert werden, wird die anfängliche Berechnung des Soll-Lenkwinkels LSoll gemäß dem Lenkwinkel-Verlauf LStart während des Ausweichmanövers AWM fortlaufend korrigiert und weiterhin auch die Fahrzeug-Soll-Verzögerung zSoll festgelegt, die während des Ausweichmanövers AWM gleichzeitig für eine Abbremsung des Nutzfahrzeug-Gespanns 100 sorgen soll.

Auf diese Weise sollen nicht nur der primär drohende Auffahrunfall sondern auch sekundäre Unfälle, wie ein Umkippen oder eine Instabilität bzw. ein Einknicken des Fahrzeug-Gespanns 100, verhindert werden.

Die Korrektur des Soll-Lenkwinkels LSoll erfolgt hierbei in Abhängigkeit einer aktuellen Querbeschleunigung aLat des Nutzfahrzeug-Gespanns 100, d.h. einer senkrecht zur Bewegungsrichtung des Schwerpunktes SP wirkenden Beschleunigung.

Diese wird hierbei ermittelt aus der zweiten Ableitung f2(xa) an der aktuellen Fahrzeug-x-Position xa:

$$aLat = vFzg^2 * f2(xa).$$

D.h. auch bei der Bestimmung der aktuellen Querbeschleunigung aLat wird auf Größen zurückgegriffen, die beispielsweise vom Stabilitäts-Kontrollsystem 50 bereits bestimmt und der Notausweich-Steuereinrichtung 70 des Notausweichsystems 80 zur Verfügung gestellt werden können.

Die Begrenzung der Querbeschleunigung aLat dient dazu, eine festgelegte Kippgrenze KG von beispielsweise $3m/s^2$ einzuhalten, ab der es bei Nutzfahrzeug-Gespannen 100 mit hoher Lage des Schwerpunktes SP zu einen Umkippen des Nutzfahrzeug-Gespanns 100 kommen kann. Diese Kippgrenze KG wird bereits in der Vorrichtung zur Umkippverhinderung 52 berücksichtigt und anhand der Kippgrenze KG für das eigene Nutzfahrzeug-Gespann 100 von der ESC-Steuereinrichtung 51 eine fahrzeugabhängige und geschwindigkeitsabhängige maximale Querbeschleunigung aLatMax ausgegeben, für die die Kippgrenze KG eingehalten wird.

Hierbei wird davon ausgegangen, dass die von der Vorrichtung zur Umkippverhinderung 52 ermittelte maximale Querbeschleunigung aLatMax für das derzeitige Fahrverhalten des eigenen Nutzfahrzeug-Gespanns 100 einen zuverlässigen Wert darstellt und dieser Wert der maximalen Querbeschleunigung aLatMax daher auch den folgenden Berechnungen für das Ausweichmanöver AWM zugrunde gelegt. Alternativ kann aber auch eine Anpassung der maximalen Querbeschleunigung aLatMax vorgesehen sein, um zu berücksichtigen, dass sich bei dem durchgeführten dynamischen Ausweichmanöver AWM die Querbeschleunigung aLat nicht so schnell aufbaut und der Soll-Lenkwinkel LSoll nicht unnötig beschnitten werden soll.

Um während des Ausweichmanövers AWM dafür zu sorgen, dass die Kippgrenze KG nicht überschritten wird, wird sobald die oben ermittelte aktuelle Querbeschleunigung aLat die maximale Querbeschleunigung aLatMax überschreitet, der Soll-Lenkwinkel LSoll begrenzt auf

$$LSoll = sgn(aLat) * aLatMax * LRatio * fstat / vFzg.$$

Die Begrenzung des Soll-Lenkwinkels LSoll führt zwangsläufig dazu, dass das Nutzfahrzeug-Gespann 100 nicht mehr der Ausweichtrajektorie AT_0 folgt (s. Fig. 2a). Vielmehr folgt das Nutzfahrzeug-Gespann 100 über das gesamte Ausweichmanöver AWM einer tatsächlichen Ausweich-Trajektorie ATreal, die durch einen tatsächlichen Lenkwinkel-Verlauf Lreal verursacht wird (s. Fig. 2c).

Um diesem Umstand Rechnung zu tragen, finden an bestimmten Zwischenpunkten Zi, mit i = 1, ..., N Neuberechnungen der Ausweichtrajektorie für das Ausweichmanöver AWM statt, d.h. es werden zyklisch aktualisierte Ausweichtrajektorien AT_i, mit i = 1, ..., N ermittelt, wobei jeweils die zuletzt berechnete Ausweichtrajektorie AT_i als Berechnungsgrundlage für die Berechnung des Soll-Lenkwinkels LSoll und der aktuellen Querbeschleunigung aLat dient.

Zur Bestimmung der jeweiligen aktualisierten Ausweichtrajektorie AT_i wird analog zur Bestimmung der initialen Ausweichtrajektorie AT_0 verfahren nur dass nun mit geänderten Randbedingungen als zu Beginn des Ausweichmanövers AWM gerechnet wird. Demnach wird als Randbedingung nicht mehr der Start-Punkt P1 sondern die Fahrsituation an dem jeweiligen Zwischenpunkt Zi berücksichtigt. Dazu wird die aktuelle Fahrzeug-x-Position xa und eine aktuelle Fahrzeug-y-Position ya berechnet aus

$$xa = xb + vFzg * \cos(YawAng\_a) * dt$$

$$ya = yb + vFzg * \sin(YawAng\_a) * dt$$

wobei yb die vor dem Zeitintervall dt gültige vorherige Fahrzeug-y-Position angibt und der Gierwinkel YawAng_a, wie bereits oben beschrieben, durch Integration aus der Gierrate YawRate berechnet wird..

Somit ergeben sich für den jeweiligen Zwischenpunkt Zi die Randbedingungen für den neuen Start-Punkt Zi der aktualisierten Ausweichtrajektorie AT_i zu f(xa) = ya und f1(xa) = tan (YawAng_a), da das Fahrzeug-Gespann 100 seine Ausrichtung geändert hat und schließlich f2(xa) = f2(xb) aus der vorherigen Ausweichtrajektorie AT_(i-1), um einen stetigen Krümmungsübergang zu gewährleisten.

Der ursprüngliche End-Punkt P2 wird für die Neuberechnung in x-Richtung nach hinten zu einem Ausweichpunkt Ai verschoben, um eine numerisch bedingte, große Lenkdynamik im Bereich des Kollisionsobjektes 200 am ursprünglichen End-Punkt P2 zu vermeiden. Dazu wird gemäß dieser Ausführungsform der Querversatz Q zum Kollisionsobjekt 200 beibehalten, d.h. die y-Koordinate des End-Punktes P2 für den Ausweichpunkt Ai übernommen, und die x-Koordinate des ursprünglichen End-Punktes P2 derartig in Fahrtrichtung des Nutzfahrzeug-Gespanns 100 nach hinten verschoben, dass zwischen dem jeweiligen Zwischenpunkt Zi und dem jetzigen Ausweichpunkt Ai die Ausweich-Distanz DA gehalten wird. Beispielhaft ist das für die ersten beiden Ausweichpunkte A1, A2 in Fig. 2a gezeigt. Dementsprechend ändern sich als Randbedingungen zur Definition des Polynoms fünften Grades, d.h. der Funktion f(x) der aktualisierten Ausweichtrajektorie AT_i, für diese Ausweichpunkte Ai lediglich die x-Koordinaten. Alternativ kann die x-Koordinate des jeweiligen Ausweichpunktes Ai aber auch um einen anderen Betrag nach hinten geschoben werden, beispielsweise jeweils um einen bestimmten Faktor f der Ausweich-Distanz DA, d.h. um einen Bruchteil oder um ein Vielfaches der Ausweich-Distanz DA.

Exemplarisch sind bis zum Erreichen des Kollisionsobjektes 200 gemäß der Ausführungsform in Fig. 2a drei Neuberechnungen vorgesehen, d.h. i = 1, 2, 3, d.h. es gibt drei Zwischenpunkte Z1, Z2, Z3, ab denen jeweils eine neue aktualisierte Ausweichtrajektorie AT_1, AT_2, AT_3 zur Berechnung des Soll-Lenkwinkels LSoll sowie der aktuellen Querbeschleunigung aLat verwendet wird. Es können aber auch deutlich mehr Neuberechnungen durchgeführt werden, um das Kollisionsobjekt 200 trotz eventuell reduziertem Soll-Lenkwinkel LSoll sicher zu umfahren.

Erreicht das Nutzfahrzeug-Gespann 100 den ursprünglichen End-Punkt P2, können weitere Neuberechnungen durchgeführt werden, um das Nutzfahrzeug-Gespann 100 geradezuziehen, d.h. parallel zum Kollisionsobjekt 200 bzw. zur Ziel-Fahrspur 300b auszurichten. Bei diesen Neuberechnungen wird lediglich der jeweilige Zwischenpunkt Zi auf die aktuelle Position des Nutzfahrzeug-Gespanns 100 verschoben. Der jeweilige Ausweichpunkt Ai wird ab Erreichen des End-Punktes P2 festgehalten.

Vorzugsweise werden bei der Neuberechnung der aktualisierten Ausweichtrajektorie AT_i die Ausweichpunkte Ai derart gewählt, dass zum einen die aktualisierte Ausweichtrajektorie AT_i für x-Werte größer als der Ausweich-Distanz DA nicht mehr als um eine Toleranz T vom ursprünglich geforderten Querversatz Q abweicht, um die Ziel-Fahrspur 300b nicht zu verlassen und zum anderen keine numerisch bedingten großen Soll-Lenkwinkel LSoll neben dem Kollisionsobjekt 200 entstehen.

Zudem wird die aktualisierte Ausweichtrajektorie AT_i derartig ausgelegt, dass diese für x-Werte größer als der Ausweich-Distanz DA ausgehend von der initialen Ausweichtrajektorie AT_0 nicht in Richtung zum Kollisionsobjekt 200 hin von der initialen Ausweichtrajektorie AT_0 abweicht, so dass das Nutzfahrzeug-Gespann 100 auf jeden Fall den Querversatz Q einhält, wenn es sich nach der Ausweich-Distanz DA auf der Ziel-Fahrspur 300b befindet. Die Toleranz T ist daher gemäß Fig. 2a auch nur nach oben, d.h. zu höheren y-Werten hin eingezeichnet.

Um weiterhin zu erreichen, dass das Nutzfahrzeug-Gespann 100 nach dem Ausweichmanöver AWM den nachfolgenden Verkehr nicht stört, wird von der Notausweich-Steuereinrichtung 70 eine Fahrzeug-Soll-Verzögerung zSoll vorgegeben, mit der das Nutzfahrzeug-Gespann 100 entlang der initialen Ausweichtrajektorie AT_0 bzw. den aktualisierten Ausweichtrajektorien AT_i derartig abgebremst wird, dass das Nutzfahrzeug-Gespann 100 einschließlich einer Gespann-Hinterseite 102 nach der Ausweich-Distanz DA bzw. hinter dem End-Punkt P2 auf der Ziel-Fahrspur 300b zum Stehen kommt.

Zusammen mit der Festlegung der aktualisierten Ausweichtrajektorie AT_i nach Erreichen des ursprünglichen End-Punktes P2 führt dies dazu, dass das Nutzfahrzeug-Gespann 100 in etwa parallel zur Ziel-Fahrspur 300b zum Stehen kommt und dabei einschließlich der Gespann-Hinterseite 102 keine x-Werte annimmt, die kleiner als die Ausweich-Distanz DA sind, so dass für den nachfolgenden Verkehr Platz geschaffen werden kann und das Nutzfahrzeug-Gespann 100 nicht über mehrere Fahrspuren 300a, 300b verteilt steht. Ab dem End-Punkt P2 können dabei je nach Fahrzeug-Geschwindigkeit vFzg noch kleine Lenkmanöver stattfinden, um das Fahrzeug-Gespann 100 bis zum Stillstand geradezuziehen.

Um dies zu erreichen, ist von der Notausweich-Steuereinrichtung 70 zunächst eine Fahrzeug-Soll-Verzögerung zSoll an das elektronische Bremssystem 60 anzufordern, aufgrund dessen das Nutzfahrzeug-Gespann 100 ab der aktuellen Fahrzeug-x-Positon xa nach einer Stillstand-Distanz DS eine Fahrzeug-Geschwindigkeit vFzg von Null erreicht, wobei

$$DS = DA + B - xa,$$

und wobei B eine Gespann-Länge des Nutzfahrzeug-Gespanns 100 angibt und xa wie oben beschrieben beispielsweise durch Odometrie während des Ausweichmanövers AWM ermittelt wird. Die Gespann-Länge B kann dem Nutzfahrzeug-Gespann 100 bzw. der Nötausweich-Steuereinrichtung 70 entsprechend vorgegeben werden. Anhand Fig. 2a ist die Stillstand-Distanz DS für die aktuelle Fahrzeug-x-Position xa des Nutzfahrzeug-Gespanns 100 dargestellt.

Daraus folgt die angeforderte Fahrzeug-Soll-Verzögerung zSoll aus

$$zSoll = 0{,}5 * vFzg ^2 / DS,$$

so dass die Fahrzeug-Soll-Verzögerung zSoll ständig an die aktuelle Fahrzeug-x-Position xa und die aktuelle Fahrzeug-Geschwindigkeit vFzg in Abhängigkeit der Stillstand-Distanz DS angepasst wird.

Um durch die angeforderte Fahrzeug-Soll-Verzögerung zSoll keine weiteren Instabilitäten des Nutzfahrzeug-Gespanns 100 zu verursachen, beispielsweise ein Verlust der Richtungsstabilität bei Überschreiten einer Kraftschlussgrenze und somit ein Ausbrechen durch Untersteuern oder Übersteuern des Zugfahrzeuges 10 oder Ausbrechen und Einknicken des Anhängers 20 des Nutzfahrzeug-Gespanns 100, wird eine Gesamtbeschleunigung aTot des Schwerpunkts SP des Nutzfahrzeug-Gespanns 100 auf eine maximale Gesamtbeschleunigung aTotMax beschränkt.

Diese maximale Gesamtbeschleunigung aTotMax stellt einen reibwertabhängigen Grenzwert dar, der aus aTotMax = mue * g folgt, wobei g die Gravitationskonstante ist, d.h. 9,81 m/s$^2$, und mue einen Reibwert angibt, der unter Annahme einer nassen Fahrbahn ca. 0,5 beträgt oder der von anderen Regelfunktionen für das vorliegende Nutzfahrzeug-Gespann 100 berechnet wird und an die Notausweich-Steuereinrichtung 70 zum Berechnen der maximale Gesamtbeschleunigung aTotMax übermittelt wird.

Aus obiger Formel ergibt sich mit dieser maximalen Gesamtbeschleunigung aTotMax eine maximale Fahrzeug-Soll-Verzögerung zSollmax von

$$zSollmax = sqrt [aTotMax\^2 - aLat\^2],$$

wobei die Querbeschleunigung aLat wie oben beschreiben aus

$$aLat = vFzg\^2 * f2(xa)$$

folgt.

Wie in Fig. 2a und Fig. 2b zu sehen, findet sobald die Gesamtbeschleunigung aTot die maximale Gesamtbeschleunigung aTotMax überschreitet eine Beschränkung der Fahrzeug-Soll-Verzögerung zSoll auf die maximale Fahrzeug-Soll-Verzögerung zSollmax statt, die in dem Fall leicht ansteigt, da sich auch die Querbeschleunigung aLat zu diesem Zeitpunkt leicht ändert. Infolge dessen steigt die Gesamtbeschleunigung aTot nicht weiter an.

D.h. das Fahrzeug-Gespann 100 wird während des Ausweichmanövers AWM beim Einlenken z.T. weniger stark abgebremst, um ein Verlust der Richtungsstabilität zu vermeiden. Notfalls kann dies dazu führen, dass die Fahrzeug-Soll-Verzögerung auf null reduziert wird, weil die aus dem aktuell angeforderten Lenkwinkel LSoll resultierende Querbeschleunigung aLat bereits der maximalen Gesamtbeschleunigung aTotMax entspricht.

Eine Fahrzeug-Soll-Verzögerung zSoll wird somit bei einem Ausweichmanöver AWM lediglich so hoch gewählt, dass die vektorielle Summe aus Längsbeschleunigung und Querbeschleunigung aLat die maximale Gesamtbeschleunigung aTotMax nicht überschreitet.

Bei dem in Fig. 2a dargestellten Ausweichmanöver AWM wird bei Erreichen der Gesamtbeschleunigung aTotMax somit zunächst die Fahrzeug-Soll-Verzögerung zSoll angepasst und in die Lenkung durch Begrenzen des Soll-Lenkwinkels LSoll nur dann eingegriffen, wenn durch die Lenkvorgabe die maximale Querbeschleunigung aLatMax überschritten wurde. Dem Ausweichen wird somit eine höhere Priorität eingeräumt als dem Verzögern des Fahrzeug-Gespanns 100.

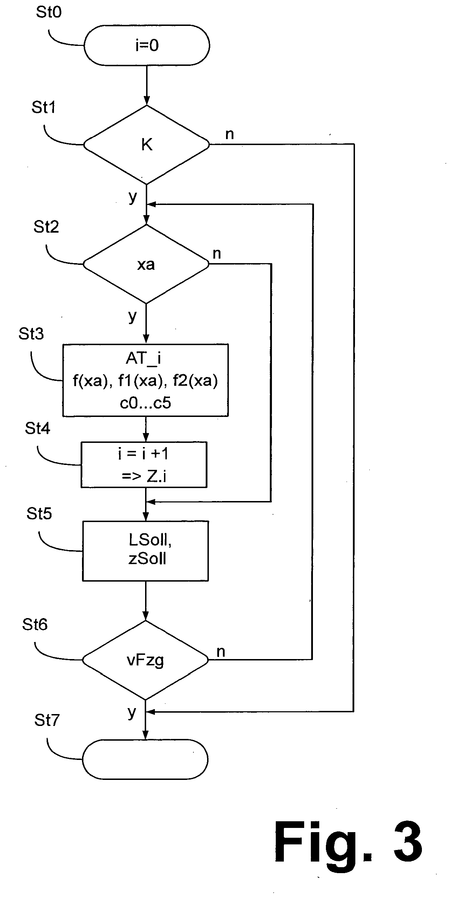

Das erfindungsgemäße Verfahren kann gemäß Fig. 3 beispielsweise folgendermaßen durchgeführt werden: In einem anfänglichen Schritt St0 wird das Notausweichsystem 80 initialisiert, beispielsweise mit dem Starten des Nutzfahrzeug-Gespanns 100.

In einem ersten Schritt St1 wird im Folgenden von dem Notbremssystem 40 ermittelt, ob eine Kollision K mit einem vorausliegenden Kollisionsobjekt 200 droht, d.h. ob anhand einer Auswertung der Daten der Kamera 41 und/oder des Radars 42 eine Fahrsituation erkannt wurde, die mit hoher Wahrscheinlichkeit zu einer Kollision K führt. Ist dies der Fall, wird von der Notausweich-Steuereinrichtung 70 des Notausweichsystems 80 im Folgenden ein Ausweichmanöver AWM eingeleitet und durchgeführt.

Die nachfolgenden Schritte St2 bis St6 werden nacheinander für jedes Zeitintervall dt bis zum Erreichen des Stillstands ausgeführt:

In einem zweiten Schritt St2 wird für das aktuelle Zeitintervall dt die aktuelle Fahrzeug-x-Position xa ausgelesen, um festzustellen, ob eine Berechnung einer Ausweichtrajektorie A_i nötig ist.

Ist eine Berechnung nötig, da das Ausweichmanöver AWM im aktuellen Zeitintervall dt startet oder weil ein Zwischenpunkt Zi erreicht wurde, wird in einem dritten Schritt St3 eine Ausweichtrajektorie AT_i wie oben beschrieben ermittelt, wobei zu Beginn des Ausweichmanövers AWM die initiale Ausweichtrajektorie AT_0 und an einem Zwischenpunkt Zi die aktualisierte Ausweichtrajektorie AT_i mit i > 0 ermittelt werden.

Wird im dritten Schritt St3 eine Ausweichtrajektorie AT_i ermittelt, wird der Index i für die Neuberechnung in einem vierten Schritt St4 um Eins erhöht und anhand der Anzahl an geplanten Neuberechnungen ermittelt, ab welcher Fahrzeug-x-Position xa die nächste Neuberechnung stattfinden soll bzw. bei welcher Fahrzeug-x-Position der nächste Zwischenpunkt Z.i erreicht wird.

Wird im dritten Schritt St3 keine neue Ausweichtrajektorie AT_i ermittelt, springt das Verfahren direkt zu einem fünften Schritt St5, in dem anhand der im Schritt St3 jeweils zuletzt ermittelten Ausweichtrajektorie AT_i mit i = 0, ..., N.bzw. deren zweiter Ableitung f2(xa) der Soll-Lenkwinkel LSoll, mit der das aktive Lenksystem 30 anzusteuern ist, um der jeweiligen Ausweichtrajektorie AT_i im Rahmen des Ausweichmanövers AWM zu folgen, sowie die Fahrzeug-Soll-Verzögerung zSoll bestimmt wird.

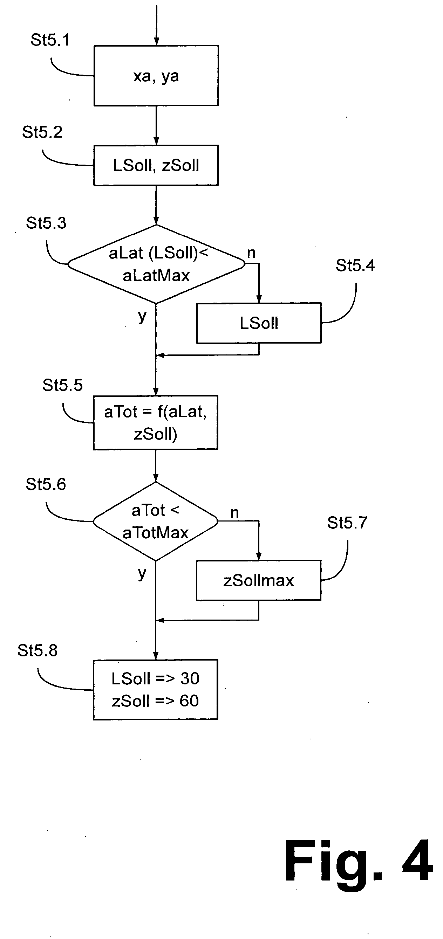

Dazu wird gemäß Fig. 4 für das aktuelle Zeitintervall dt in einem ersten Zwischenschritt St5.1 die Fahrzeug-x-Position xa wie oben angegeben durch Odometrie ermittelt.

In einem zweiten Zwischenschritt St5.2 wird anhand der zweiten Ableitung f2(xa) an der im ersten Zwischenschritt St5.1 ermittelten Fahrzeug-x-Position xa für das aktuelle Zeitintervall dt der Soll-Lenkwinkel LSoll ermittelt. Ferner wird die Fahrzeug-Soll-Verzögerung zSoll für das aktuelle Zeitintervall dt derartig festgelegt, dass das Nutzfahrzeug-Gespann 100 nach der Stillstand-Distanz DS zum Stehen kommt, so dass das Nutzfahrzeug-Gespann 100 mit seiner Gespann-Hinterseite 102 die Ausweich-Distanz DA vollständig hinter sich gelassen hat, d.h. dass auch die Gespann-Hinterseite 102 neben dem Kollisionsobjekt 200 zum Stehen kommt und damit die Ausgangs-Fahrspur 300a hinter dem Kollisionsobjekt 200 vollständig für den nachfolgenden Verkehr freigibt.

In einem dritten Zwischenschritt St5.3 wird für das aktuelle Zeitintervall dt geprüft, ob das Nutzfahrzeug-Gespann 100 aufgrund des im zweiten Zwischenschritt St5.2 ermittelten Lenkwinkels LSoll droht zu kippen und der Soll-Lenkwinkel LSoll wie oben angegeben in einem vierten Zwischenschritt St5.4 begrenzt, falls die Querbeschleunigung aLat (f2(xa)) die maximale Querbeschleunigung aLatMax für diesen Soll-Lenkwinkel LSoll überschreitet.

Zum Verhindern eines Verlusts der Richtungsstabilität infolge der angeforderten Fahrzeug-Soll-Verzögerung zSoll bei Durchführung des Ausweichmanövers AWM, d.h. einem Ausbrechen des Fahrzeug-Gespanns 100, wird für das aktuelle Zeitintervall dt in einem fünften Zwischenschritt St5.5 eine aufgrund der im zweiten Zwischenschritt St5.2 ermittelten Fahrzeug-Soll-Verzögerung zSoll bewirkte Gesamtbeschleunigung aTot ermittelt und in einem sechsten Zwischenschritt St5.6 geprüft, ob die Gesamtbeschleunigung aTot eine maximale Gesamtbeschleunigung aTotMax erreicht hat oder übersteigt. Ist dies der Fall, wird in einem siebenten Zwischenschritt St5.7 die Fahrzeug-Soll-Verzögerung zSoll auf die maximale Fahrzeug-Soll-Verzögerung zSollmax begrenzt. Da die Gesamtbeschleunigung aTot auch abhängig vom Soll-Lenkwinkel LSoll ist, wird somit der Bremsung eine niedrigere Priorität eingeräumt als der Lenkung.

In einem achten Zwischenschritt St5.8 wird der ggf. begrenzte Soll-Lenkwinkel LSoll an das aktive Lenksystem 30 und die ggf. begrenzte Fahrzeug-Soll-Verzögerung zSoll an das elektronische Bremssystem 60 ausgegeben.

In einem sechsten Schritt St6 wird gemäß Fig. 3 geprüft, ob die Fahrzeug-Geschwindigkeit vFzg in diesem Zeitintervall dt den Stillstand erreicht hat oder eine quasi dem Stillstand entsprechende Fahrzeug-Geschwindigkeit vFzg. Ist dies der Fall, kommt das Nutzfahrzeug-Gespann 100 in einem siebenten Schritt St7 zum Stehen und ist dabei aufgrund der Berechnung der Ausweichtrajektorien AT_0, AT_i sowie der Fahrzeug-Soll-Verzögerung zSoll in etwa parallel zur Ziel-Fahrspur 300b ausgerichtet und ragt nach hinten nicht über das Kollisionsobjekt 200 hinaus, so dass für den nachfolgenden Verkehr Platz geschaffen wird.

Ist der Stillstand im sechsten Schritt St6 für dieses Zeitintervall dt nicht erreicht, wird zum Schritt St2 zurückgesprungen und das Verfahren ab da erneut für das nächste Zeitintervall dt durchgeführt.

Bezugszeichenliste (Bestandteil der Beschreibung)

| | |
|---|---|
| 10 | Zugfahrzeug |
| 20 | Anhänger |

| 30 | aktives Lenksystem |
|---|---|
| 40 | Notbremssystem (AEBS) |
| 41 | Kamera |
| 42 | Radar |
| 50 | Stabilitäts-Kontrollsystem (ESC) |
| 51 | ESC-Steuereinrichtung |
| 52 | Vorrichtung zur Umkippverhinderung |
| 60 | elektronisches Bremssystem (EBS) |
| 61 | EBS-Steuereinrichtung |
| 70 | Notausweich-Steuereinrichtung |
| 80 | Notausweichsystem |
| 90 | Satelliten-Navigations-System |
| 100 | Nutzfahrzeug-Gespann |
| 101 | Gespann-Vorderseite |
| 102 | Gespann-Hinterseite |
| 200 | Kollisionsobjekt |
| 300a | Ausgangs-Fahrspur |
| 300b | Ziel-Fahrspur |
| Ai | Ausweichpunkt |
| aLat | Querbeschleunigung |
| aLatMax | maximale Querbeschleunigung |
| AT_0 | initiale Ausweichtrajektorien |
| AT_i, i>0 | aktualisierte Ausweichtrajektorien |
| aTot | Gesamtbeschleunigung |
| aTotMax | maximale Gesamtbeschleunigung |
| ATreal | tatsächliche Ausweich-Trajektorie |
| AWM | Ausweichmanöver |
| B | Gespann-Länge |
| ci | Koeffizienten der Funktion f(x) |
| DA | Ausweich-Distanz |
| DS | Stillstand-Distanz |
| dt | Zeitintervall |
| f | Faktor |
| f(x) | Funktion |
| f1(x) | erste Ableitung der Funktion f(x) |
| f2(x) | zweite Ableitung der Funktion f(x) |
| fStat | stationäre Übertragungsfunktion des Gierverhaltens |
| g | Gravitationskonstante |
| K | Kollision |
| KG | Kippgrenze |
| LGrad | Eigenlenkgradient |
| LRatio | Gesamtlenkübersetzung |
| Lreal | tatsächlicher Lenkwinkel-Verlauf |
| LSoll | Soll-Lenkwinkel |
| LStart | Lenkwinkel-Verlauf |
| mue | Reibwert |
| P1 | Start-Punkt |
| P2 | End-Punkt |
| Q | Querversatz |
| R | Radstand |
| SP | Schwerpunkt des Nutzfahrzeug-Gespanns 100 |
| T | Toleranz |
| vFzg | Fahrzeug-Geschwindigkeit |
| xa | aktuelle Fahrzeug-x-Position |
| xb | vorherige Fahrzeug-x-Position |
| YawAng_a | aktueller Gierwinkel |
| YawAng_b | vorheriger Gierwinkel |
| YawRate | Gierrate |

| ya | aktuelle Fahrzeug-y-Position |
|---|---|
| yb | vorherige Fahrzeug-y-Position |
| Zi | Zwischenpunkt |
| zSoll | Fahrzeug-Soll-Verzögerung |
| zSollmax | maximale Fahrzeug-Soll-Verzögerung |

**Patentansprüche**

1. Verfahren zum Durchführen eines Ausweichmanövers (AWM) mit einem Nutzfahrzeug-Gespann (100), mit mindestens den folgenden Schritten:

   - Erfassen, ob eine Kollision (K) zwischen dem Nutzfahrzeug-Gespann (100) und einem Kollisionsobjekt (200) droht (St1), wobei das Kollisionsobjekt (200) von dem Nutzfahrzeug-Gespann (100) um eine Ausweich-Distanz (DA) beabstandet ist;
   - Ermitteln einer Ausweichtrajektorie (AT_i, i = 0, ..., N) falls eine Kollision (K) erkannt wurde derart, dass das Nutzfahrzeug-Gespann (100) bei Abfahren der Ausweichtrajektorie (AT_i) dem Kollisionsobjekt (200) ausweicht, ohne dabei das Kollisionsobjekt (200) zu berühren (St3);
   - Ermitteln eines Soll-Lenkwinkels (LSoll) anhand der Ausweichtrajektorie (AT_i) und Ansteuern eines aktiven Lenksystems (30) des Nutzfahrzeug-Gespanns (100) in Abhängigkeit des ermittelten Soll-Lenkwinkels (LSoll) derart, dass sich das Nutzfahrzeug-Gespann (100) entlang der Ausweichtrajektorie (AT_i) von einer Ausgangs-Fahrspur (300a) auf eine Ziel-Fahrspur (300b) bewegt zum Durchführen des Ausweichmanövers (AWM) (St5);
   - Ermitteln einer Fahrzeug-Soll-Verzögerung (zSoll) und Ansteuern eines elektronischen Bremssystems (60) des Nutzfahrzeug-Gespanns (100) in Abhängigkeit der Fahrzeug-Soll-Verzögerung (zSoll) zum Abbremsen des Nutzfahrzeug-Gespanns (100) während der Durchführung des Ausweichmanövers (AWM) (St5), wobei die Fahrzeug-Soll-Verzögerung (zSoll) eine Längsbeschleunigung des Nutzfahrzeug-Gespanns (100) ist, wobei

      während der Durchführung des Ausweichmanövers (AWM) eine Querbeschleunigung (aLat) des Nutzfahrzeug-Gespanns (100) ermittelt wird (St5.3),
      **dadurch gekennzeichnet, dass**

   - der Soll-Lenkwinkel (LSoll) begrenzt wird, falls die Querbeschleunigung (aLat) eine maximale Querbeschleunigung (aLatMax) erreicht oder überschreitet zum Verhindern eines Umkippens des Nutzfahrzeug-Gespanns (100) (St5.4), und
   - die Fahrzeug-Soll-Verzögerung (zSoll) auf eine maximale Fahrzeug-Soll-Verzögerung (zSollmax) begrenzt wird, falls eine Gesamtbeschleunigung (aTot) des Nutzfahrzeug-Gespanns (100) eine maximale Gesamtbeschleunigung (aTotMax) erreicht oder überschreitet (St5.7) zum Verhindern eines Verlusts der Richtungsstabilität oder eines Ausbrechens,
   - wobei zur Begrenzung der Fahrzeug-Soll-Verzögerung (zSoll) eine Gesamtbeschleunigung (aTot) aus der vektoriellen Summe der Querbeschleunigung (aLat) und der Fahrzeug-Soll-Verzögerung (zSoll) ermittelt wird und die Fahrzeug-Soll-Verzögerung (zSoll) auf die maximale Fahrzeug-Soll-Verzögerung (zSollmax) begrenzt wird, falls die Gesamtbeschleunigung (aTot) die maximale Gesamtbeschleunigung (aTotMax) erreicht oder übersteigt (St5.6), wobei die maximale Fahrzeug-Soll-Verzögerung (zSollmax) aus der maximalen Gesamtbeschleunigung (aTotMax) und der aktuellen Querbeschleunigung (aLat) errechnet wird, wobei die maximale Fahrzeug-Soll-Verzögerung (zSollmax) derart festgelegt wird, dass eine Fahrzeug-Soll-Verzögerung (zSoll) lediglich dann angefordert werden kann, wenn die maximale Gesamtbeschleunigung (aTotMax) durch die durch den aktuell angeforderten Soll-Lenkwinkel (LSoll) resultierende Querbeschleunigung (aLat) nicht bereits erreicht oder überschritten wird.

2. Verfahren nach Anspruch 1, **dadurch gekennzeichnet, dass** die Fahrzeug-Soll-Verzögerung (zSoll) während des Ausweichmanövers (AWM) derart gewählt wird, dass das Fahrzeug-Gespann (100) mit einer Gespann-Hinterseite (102) bei der Ausweichdistanz (DA) oder in Fahrtrichtung nach der Ausweichdistanz (DA) zum Stehen kommt (ST5.2).

3. Verfahren nach Anspruch 1 oder 2, **dadurch gekennzeichnet, dass** zur Begrenzung der Fahrzeug-Soll-Verzögerung (zSoll) geprüft wird, ob die Fahrzeug-Soll-Verzögerung (zSoll) die maximale Fahrzeug-Soll-Verzögerung (zSollmax) erreicht oder überschreitet, wobei die maximale Fahrzeug-Soll-Verzögerung (zSollmax) von der maximalen Gesamtbeschleunigung (aTotMax) abhängig ist.

4. Verfahren nach einem der vorhergehenden Ansprüche, **dadurch gekennzeichnet, dass** die maximale Gesamtbeschleunigung (aTotMax) abhängig von einem Reibwert (mue) ist.

5. Verfahren nach einem der vorhergehenden Ansprüche, **dadurch gekennzeichnet, dass** zu Beginn des Ausweichmanövers (AWM) eine initiale Ausweichtrajektorie (AT_0) ermittelt wird (St3), wobei die initiale Ausweichtrajektorie (AT_0) in Abhängigkeit eines Start-Punktes (P1) auf der Ausgangs-Fahrspur (300a) und eines End-Punktes (P2) auf der Ziel-Fahrspur (300b) festgelegt wird.

6. Verfahren nach Anspruch 5, **dadurch gekennzeichnet, dass** während der Durchführung des Ausweichmanövers (AWM) zyklisch an definierten Zwischenpunkten (Zi) eine aktualisierte Ausweichtrajektorie (AT_i, i > 0) ermittelt wird, wobei durch die aktualisierte Ausweichtrajektorie (AT_i, i > 0) Abweichungen einer tatsächlichen Ausweichtrajektorie (ATreal) des Fahrzeug-Gespanns (100) von der initialen Ausweichtrajektorie (AT_0) ausgeglichen werden (St3).

7. Verfahren nach Anspruch 6, **dadurch gekennzeichnet, dass** die aktualisierte Ausweichtrajektorie (AT_i, i > 0) in Abhängigkeit des Zwischenpunktes (Zi) und einem dem jeweiligen Zwischenpunkt (Zi) zugeordneten Ausweichpunkt (Ai) derartig ermittelt wird, dass das Nutzfahrzeug-Gespann (100) bei Abfahren der jeweiligen aktualisierten Ausweichtrajektorie (AT_i, i > 0) dem Kollisionsobjekt (200) ausweicht, ohne das Kollisionsobjekt (200) zu berühren, und wobei die aktualisierte Ausweichtrajektorie (AT_i, i > 0) derartig festgelegt wird, dass diese auf der initialen Ausweichtrajektorie (AT_0) liegt oder von der initialen Ausweichtrajektorie (AT_0) ausgehend in Richtung vom Kollisionsobjekt (200) weg zur Ziel-Fahrbahn (300b) um maximal eine Toleranz (T) abweicht.

8. Verfahren nach Anspruch 6 oder 7, **dadurch gekennzeichnet, dass** die jeweiligen Zwischenpunkte (Zi) in Abhängigkeit einer aktuellen Fahrzeug-x-Position (xa) und einer aktuellen Fahrzeug-y-Position (ya) ermittelt werden, wobei die aktuelle Fahrzeug-x-Position (xa) und die aktuelle Fahrzeug-y-Position (ya) durch Odometrie aus einer vor einem Zeitintervall (dt) gültigen vorherigen Fahrzeug-x-Position (xb) bzw. vorherigen Fahrzeug-y-Position (yb), dem aktuellen Gierwinkel (YawAng_a) und der aktuellen Fahrzeug-Geschwindigkeit (vFzg) folgen.

9. Verfahren nach Anspruch 8, **dadurch gekennzeichnet, dass** der aktuelle Gierwinkel (YawAng_a) durch Integration aus einem vor dem Zeitintervall (dt) gültigen vorherigen Gierwinkel (YawAng_b) und der aktuellen Gierrate (YawRate) folgt.

10. Verfahren nach Anspruch 8 oder 9, **dadurch gekennzeichnet, dass** zur Bestimmung der aktuellen Fahrzeug-x-Position (xa) auf Informationen (vFzg, YawRate) eines Stabilitäts-Kontrollsystems (50) zurückgegriffen wird.

11. Verfahren nach einem der Ansprüche 8 bis 10, **dadurch gekennzeichnet, dass** der Soll-Lenkwinkel (LSoll) in Abhängigkeit einer zweiten Ableitung (f2) der Funktion (f) der jeweils zuletzt berechneten initialen oder aktualisierten Ausweichtrajektorie (AT_i, i = 0,..., N) an einer aktuellen Fahrzeug-x-Position (xa) ermittelt wird, falls die aktuelle Querbeschleunigung (aLat) die maximale Querbeschleunigung (aLatMax) nicht überschreitet.

12. Verfahren nach einem der Ansprüche 6 bis 11, **dadurch gekennzeichnet, dass** bei der Durchführung des Ausweichmanövers (AWM) zwischen drei und zwanzig Zwischenpunkte (Zi) gewählt werden, an denen jeweils eine aktualisierte Ausweichtrajektorie (AT_i, i > 0) ermittelt wird.

13. Verfahren nach einem der Ansprüche 6 bis 12, **dadurch gekennzeichnet, dass** nach Erreichen der Ausweichdistanz (DA) durch das Nutzfahrzeug-Gespann (100) weitere Ausweichtrajektorien (AT_i) ermittelt werden, wobei der Ausweichpunkt (Ai) ab Erreichen der Ausweichdistanz (DA) festgehalten wird zum Ausrichten des Fahrzeug-Gespanns (100) parallel zur Ziel-Fahrspur (300b).

14. Verfahren nach einem der vorhergehenden Ansprüche, **dadurch gekennzeichnet, dass** die maximale Querbeschleunigung (aLatMax) aus einer Kippgrenze (KG) folgt, wobei die Kippgrenze (KG) von einer Vorrichtung zur Umkippverhinderung (52) vorgegeben wird und konstant ist, z.B. $3 m/s^2$, oder von der Vorrichtung zur Umkippverhinderung (52) fahrzeugabhängig ermittelt wird.

15. Verfahren nach einem der vorhergehenden Ansprüche, **dadurch gekennzeichnet, dass** die Querbeschleunigung (aLat) in Abhängigkeit einer zweiten Ableitung (f2) der Funktion (f) der jeweils zuletzt berechneten initialen oder aktualisierten Ausweichtrajektorie (AT_i, i = 0,..., N) an einer aktuellen Fahrzeug-x-Position (xa) ermittelt wird.

16. Notausweichsystem (80), eingerichtet zur Durchführung eines Verfahrens nach einem der vorhergehenden Ansprüche, mindestens aufweisend ein aktives Lenksystem (30), ein Notbremssystem (40), ein Stabilitäts-Kontrollsystem (50) mit einer Umkippverhinderung (52) sowie ein elektronisches Bremssystem (60).

17. Nutzfahrzeug-Gespann (200) aus einem Zugfahrzeug (10) und einem Anhänger (20) mit einem Notausweichsystem (80) nach Anspruch 16.

**Claims**

1. Method for executing an evasive maneuver (AWM) using a commercial vehicle combination (100), comprising at least the following steps:

   - detecting whether a collision (K) between the commercial vehicle combination (100) and a collision object (200) is imminent (St1), the collision object (200) being spaced from the commercial vehicle combination (100) by an evasive distance (DA);
   - determining an evasive trajectory (AT_i, i = 0, ..., N) if a collision (K) has been identified, such that the commercial vehicle combination (100), when traveling along the evasive trajectory (AT_i), avoids the collision object (200) without touching the collision object (200) in the process (St3);
   - determining a target steering angle (LSoll) based on the evasive trajectory (AT_i), and controlling an active steering system (30) of the commercial vehicle combination (100) depending on the determined target steering angle (LSoll) such that the commercial vehicle combination (100) moves along the evasive trajectory (AT_i) from an initial lane (300a) to a target lane (300b) in order to execute the evasive maneuver (AWM) (St5);
   - determining a vehicle target deceleration (zSoll) and controlling an electronic braking system (60) of the commercial vehicle combination (100) depending on the vehicle target deceleration (zSoll) in order to brake the commercial vehicle combination (100) when executing the evasive maneuver (AWM) (St5), the vehicle target deceleration (zSoll) being a longitudinal acceleration of the commercial vehicle combination (100),a lateral acceleration (aLat) of the commercial vehicle combination (100) being determined when executing the evasive maneuver (AWM) (St5.3),
   **characterized in that**
   - the target steering angle (LSoll) is limited if the lateral acceleration (aLat) reaches or exceeds a maximum lateral acceleration (aLatMax) in order to prevent the commercial vehicle combination (100) from tilting (St5.4), and
   - the vehicle target deceleration (zSoll) is limited to a maximum vehicle target deceleration (zSollmax) if a total acceleration (aTot) of the commercial vehicle combination (100) reaches or exceeds a maximum total acceleration (aTotMax) (St5.7) in order to prevent loss of directional stability or swerving,
   - in order to limit the vehicle target deceleration (zSoll), a total acceleration (aTot) being determined from the vectorial sum of the lateral acceleration (aLat) and the vehicle target deceleration (zSoll) and the vehicle target deceleration (zSoll) being limited to the maximum vehicle target deceleration (zSollmax) if the total acceleration (aTot) reaches or exceeds the maximum total acceleration (aTotMax) (St5.6), the maximum vehicle target deceleration (zSollmax) being calculated from the maximum total acceleration (aTotMax) and the current lateral acceleration (aLat), the maximum vehicle target deceleration (zSollmax) being set such that a vehicle target deceleration (zSoll) can only be requested if the maximum total acceleration (aTotMax) has not already been reached or exceeded by the lateral acceleration (aLat) resulting from the currently requested target steering angle (LSoll).

2. Method according to claim 1, **characterized in that** during the evasive maneuver (AWM), the vehicle target deceleration (zSoll) is selected such that the vehicle combination (100) comes to a stop with a combination rear side (102) at the evasive distance (DA) or in the direction of travel after the evasive distance (DA) (ST5.2).

3. Method according to claim 1 or claim 2, **characterized in that** in order to limit the vehicle target deceleration (zSoll), it is checked whether the vehicle target deceleration (zSoll) reaches or exceeds the maximum vehicle target deceleration (zSollmax), the maximum vehicle target deceleration (zSollmax) depending on the maximum total acceleration (aTotMax).

4. Method according to any of the preceding claims, **characterized in that** the maximum total acceleration (aTotMax) depends on a friction coefficient (mue).

5. Method according to any of the preceding claims, **characterized in that** at the beginning of the evasive maneuver (AWM), an initial evasive trajectory (AT_0) is determined (St3), the initial evasive trajectory (AT_0) being set depending on a start point (P1) on the initial lane (300a) and an end point (P2) on the target lane (300b).

6. Method according to claim 5, **characterized in that** when executing the evasive maneuver (AWM), an updated evasive trajectory (AT_i, i > 0) is determined cyclically at defined intermediate points (Zi), deviations of an actual evasive trajectory (ATreal) of the vehicle combination (100) from the initial evasive trajectory (AT_0) being compensated for by the updated evasive trajectory (AT_i, i > 0) (St3).

7. Method according to claim 6, **characterized in that** the updated evasive trajectory (AT_i, i > 0) is determined depending on the intermediate point (Zi) and an evasive point (Ai) assigned to the relevant intermediate point (Zi) such that the commercial vehicle combination (100), when traveling along the relevant updated evasive trajectory (AT_i, i > 0), avoids the collision object (200) without touching the collision object (200), and
the updated evasive trajectory (AT_i, i > 0) being set such that it lies on the initial evasive trajectory (AT_0) or deviates from the initial evasive trajectory (AT_0) in the direction away from the collision object (200) to the target lane (300b) by a maximum of one tolerance (T).

8. Method according to claim 6 or claim 7, **characterized in that** the respective intermediate points (Zi) are determined depending on a current vehicle x-position (xa) and a current vehicle y-position (ya), the current vehicle x-position (xa) and the current vehicle y-position (ya) following, by means of odometry, from a previous vehicle x-position (xb) and previous vehicle y-position (yb), respectively, valid before a time interval (dt), the current yaw angle (YawAng_a) and the current vehicle speed (vFzg).

9. Method according to claim 8, **characterized in that** the current yaw angle (YawAng_a) follows, by means of integration, from a previous yaw angle (YawAng_b) valid before the time interval (dt) and the current yaw rate (YawRate).

10. Method according to claim 8 or claim 9, **characterized in that** information (vFzg, YawRate) from a stability control system (50) is used in order to determine the current vehicle x-position (xa).

11. Method according to any of claims 8 to 10, **characterized in that** the target steering angle (LSoll) is determined depending on a second derivative (f2) of the function (f) of the most recently calculated initial or updated evasive trajectory (AT_i, i = 0,..., N) at a current vehicle x-position (xa) if the current lateral acceleration (aLat) does not exceed the maximum lateral acceleration (aLatMax).

12. Method according to any of claims 6 to 11, **characterized in that** when executing the evasive maneuver (AWM), between three and twenty intermediate points (Zi) are selected, at each of which an updated evasive trajectory (AT_i, i > 0) is determined.

13. Method according to any of claims 6 to 12, **characterized in that** after the commercial vehicle combination (100) has reached the evasive distance (DA), further evasive trajectories (AT_i) are determined, the evasive point (Ai) being maintained from the time the evasive distance (DA) is reached in order to align the vehicle combination (100) parallel to the target lane (300b).

14. Method according to any of the preceding claims, **characterized in that** the maximum lateral acceleration (aLatMax) follows from a tilting limit (KG), the tilting limit (KG) being specified by a tilting prevention device (52) and being constant, e.g. $3m/s^2$, or being determined by the tilting prevention device (52), depending on the vehicle.

15. Method according to any of the preceding claims, **characterized in that** the lateral acceleration (aLat) is determined depending on a second derivative (f2) of the function (f) of the most recently calculated initial or updated evasive trajectory (AT_i, i = 0,..., N) at a current vehicle x-position (xa).

16. Emergency evasion system (80), configured to execute a method according to any of the preceding claims, comprising at least an active steering system (30), an emergency braking system (40), a stability control system (50) which has a tilting prevention (52), and an electronic braking system (60).

17. Commercial vehicle combination (200) consisting of a towing vehicle (10) and a trailer (20) which has an emergency evasion system (80) according to claim 16.

**Revendications**

1. Procédé permettant de réaliser une manoeuvre d'évitement (AWM) avec un attelage de véhicule utilitaire (100), comportant au moins les étapes suivantes :

   - détecter si une collision (K) entre l'attelage de véhicule utilitaire (100) et un objet de collision (200) est imminente (St1), dans lequel l'objet de collision (200) est éloigné de l'attelage de véhicule utilitaire (100) d'une distance d'évitement (DA) ;
   - déterminer une trajectoire d'évitement (AT_i, i = 0, ..., N) si une collision (K) a été détectée de telle sorte que l'attelage de véhicule utilitaire (100), en suivant la trajectoire d'évitement (AT_i), évite l'objet de collision (200) sans toucher l'objet de collision (200) (St3) ;
   - déterminer un angle de braquage de consigne (LSoll) à l'aide de la trajectoire d'évitement (AT_i) et commander un système de direction actif (30) de l'attelage de véhicule utilitaire (100) en fonction de l'angle de braquage de consigne (LSoll) déterminé de telle sorte que l'attelage de véhicule utilitaire (100) se déplace le long de la trajectoire d'évitement (AT_i) depuis une voie de circulation initiale (300a) vers une voie de circulation cible (300b) pour réaliser la manoeuvre d'évitement (AWM) (St5) ;
   - déterminer une décélération de consigne de véhicule (zSoll) et commander un système de freinage électronique (60) de l'attelage de véhicule utilitaire (100) en fonction de la décélération de consigne de véhicule (zSoll) pour freiner l'attelage de véhicule utilitaire (100) pendant la réalisation de la manoeuvre d'évitement (AWM) (St5), dans lequel la décélération de consigne de véhicule (zSoll) est une accélération longitudinale de l'attelage de véhicule utilitaire (100), dans lequel, pendant la réalisation de la manoeuvre d'évitement (AWM), une accélération transversale (aLat) de l'attelage de véhicule utilitaire (100) est déterminée (St5.3),
   **caractérisé en ce que**
   - l'angle de braquage de consigne (LSoll) est limité si l'accélération transversale (aLat) atteint ou dépasse une accélération transversale maximale (aLatMax) afin d'empêcher un renversement de l'attelage de véhicule utilitaire (100) (St5.4), et
   - la décélération de consigne de véhicule (zSoll) est limitée à une décélération de consigne de véhicule maximale (zSollmax) si une accélération totale (aTot) de l'attelage de véhicule utilitaire (100) atteint ou dépasse une accélération totale maximale (aTotMax) (St5.7) pour empêcher une perte de stabilité directionnelle ou un dérapage,
   - dans lequel, pour limiter la décélération de consigne de véhicule (zSoll), une accélération totale (aTot) est déterminée à partir de la somme vectorielle de l'accélération transversale (aLat) et de la décélération de consigne de véhicule (zSoll) et la décélération de consigne de véhicule (zSoll) est limitée à la décélération de consigne de véhicule maximale (zSollmax) si l'accélération totale (aTot) atteint ou dépasse l'accélération totale maximale (aTotMax) (St5.6), dans lequel la décélération de consigne de véhicule maximale (zSollmax) est calculée à partir de l'accélération totale maximale (aTotMax) et de l'accélération transversale actuelle (aLat), dans lequel la décélération de consigne de véhicule maximale (zSollmax) est définie de telle sorte qu'une décélération de consigne de véhicule (zSoll) ne peut être demandée que si l'accélération totale maximale (aTotMax) n'est pas déjà atteinte ou dépassée par l'accélération transversale (aLat) résultant de l'angle de braquage de consigne (LSoll) actuellement demandé.

2. Procédé selon la revendication 1, **caractérisé en ce que** la décélération de consigne de véhicule (zSoll) est choisie pendant la manoeuvre d'évitement (AWM) de telle sorte que l'attelage de véhicule (100) s'arrête avec un côté arrière d'attelage (102) à la distance d'évitement (DA) ou dans le sens de la marche après la distance d'évitement (DA) (ST5.2).

3. Procédé selon la revendication 1 ou 2, **caractérisé en ce que,** pour limiter la décélération de consigne de véhicule (zSoll), on vérifie si la décélération de consigne de véhicule (zSoll) atteint ou dépasse la décélération de consigne de véhicule maximale (zSollmax), dans lequel la décélération de consigne de véhicule maximale (zSollmax) dépend de l'accélération totale maximale (aTotMax).

4. Procédé selon l'une des revendications précédentes, **caractérisé en ce que** l'accélération totale maximale (aTotMax) dépend d'un coefficient de frottement (mue).

5. Procédé selon l'une des revendications précédentes, **caractérisé en ce que,** au début de la manoeuvre d'évitement (AWM), une trajectoire d'évitement initiale (AT_0) est déterminée (St3), dans lequel la trajectoire d'évitement initiale (AT_0) est définie en fonction d'un point de départ (P1) sur la voie de circulation initiale (300a) et d'un point d'arrivée (P2) sur la voie de circulation cible (300b).

**6.** Procédé selon la revendication 5, **caractérisé en ce que,** pendant la réalisation de la manoeuvre d'évitement (AWM), une trajectoire d'évitement actualisée (AT_i, i > 0) est déterminée de manière cyclique en des points intermédiaires (Zi) définis, dans lequel, au moyen de la trajectoire d'évitement actualisée (AT_i, i > 0), des écarts entre une trajectoire d'évitement réelle (ATreal) de l'attelage de véhicule (100) et la trajectoire d'évitement initiale (AT_0) sont compensés (St3).

**7.** Procédé selon la revendication 6, **caractérisé en ce que** la trajectoire d'évitement actualisée (AT_i, i > 0) est déterminée en fonction du point intermédiaire (Zi) et d'un point d'évitement (Ai) associé au point intermédiaire (Zi) respectif de telle sorte que l'attelage de véhicule utilitaire (100), en suivant la trajectoire d'évitement actualisée (AT_i, i > 0) respective, évite l'objet de collision (200) sans toucher l'objet de collision (200), et dans lequel la trajectoire d'évitement actualisée (AT_i, i > 0) est définie de telle sorte qu'elle se situe sur la trajectoire d'évitement initiale (AT_0) ou qu'elle s'écarte de la trajectoire d'évitement initiale (AT_0) d'une tolérance (T) au maximum en s'éloignant de l'objet de collision (200) et en se dirigeant vers la voie de circulation cible (300b).

**8.** Procédé selon la revendication 6 ou 7, **caractérisé en ce que** les points intermédiaires (Zi) respectifs sont déterminés en fonction d'une position x actuelle de véhicule (xa) et d'une position y actuelle de véhicule (ya), dans lequel la position x actuelle de véhicule (xa) et la position y actuelle de véhicule (ya) résultent d'une odométrie à partir d'une position x précédente de véhicule (xb) ou d'une position y précédente de véhicule (yb) valable avant un intervalle de temps (dt), de l'angle de lacet actuel (YawAng_a) et de la vitesse de véhicule actuelle (vFzg).

**9.** Procédé selon la revendication 8, **caractérisé en ce que** l'angle de lacet actuel (YawAng_a) résulte de l'intégration d'un angle de lacet précédent (YawAng_b) valable avant l'intervalle de temps (dt) et du taux de lacet actuel (YawRate).

**10.** Procédé selon la revendication 8 ou 9, **caractérisé en ce que,** pour déterminer la position x de véhicule actuelle (xa), on a recours à des informations (vFzg, YawRate) d'un système de contrôle de la stabilité (50).

**11.** Procédé selon l'une des revendications 8 à 10, **caractérisé en ce que** l'angle de braquage de consigne (LSoll) est déterminé en fonction d'une dérivée seconde (f2) de la fonction (f) de la trajectoire d'évitement (AT_i, i = 0, ..., N) initiale ou actualisée calculée respectivement en dernier lieu à une position x actuelle de véhicule (xa), dans le cas où l'accélération transversale actuelle (aLat) ne dépasse pas l'accélération transversale maximale (aLatMax).

**12.** Procédé selon l'une des revendications 6 à 11, **caractérisé en ce que,** lors de la réalisation de la manoeuvre d'évitement (AWM), entre trois et vingt points intermédiaires (Zi) sont choisis, à chacun desquels respectivement une trajectoire d'évitement actualisée (AT_i, i > 0) est déterminée.

**13.** Procédé selon l'une des revendications 6 à 12, **caractérisé en ce que,** après l'atteinte de la distance d'évitement (DA) par l'attelage de véhicule utilitaire (100), d'autres trajectoires d'évitement (AT_i) sont déterminées, dans lequel le point d'évitement (Ai) est maintenu à partir de l'atteinte de la distance d'évitement (DA) pour orienter l'attelage de véhicule (100) parallèlement à la voie de circulation cible (300b).

**14.** Procédé selon l'une des revendications précédentes, **caractérisé en ce que** l'accélération transversale maximale (aLatMax) résulte d'une limite de renversement (KG), dans lequel la limite de renversement (KG) est prédéfinie par un dispositif permettant d'empêcher le renversement (52) et est constante, par exemple est de 3 m/s$^2$, ou est déterminée par le dispositif permettant d'empêcher le renversement (52) en fonction du véhicule.

**15.** Procédé selon l'une des revendications précédentes, **caractérisé en ce que** l'accélération transversale (aLat) est déterminée à une position x actuelle de véhicule (xa) en fonction d'une dérivée seconde (f2) de la fonction (f) de la trajectoire d'évitement (AT_i, i = 0, ..., N) initiale ou actualisée calculée respectivement en dernier lieu.

**16.** Système d'évitement d'urgence (80), configuré pour réaliser un procédé selon l'une des revendications précédentes, présentant au moins un système de direction actif (30), un système de freinage d'urgence (40), un système de contrôle de la stabilité (50) comportant un empêchement du renversement (52) ainsi qu'un système de freinage électronique (60).

**17.** Attelage de véhicule utilitaire (200) constitué d'un véhicule tracteur (10) et d'une remorque (20) comportant un système d'évitement d'urgence (80) selon la revendication 16.

**Fig. 1**

EP 3 515 781 B1

**Fig. 2a**

**Fig. 2b**

**Fig. 2c**

EP 3 515 781 B1

**Fig. 3**

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2240354 A
- EP 2268515 A
- EP 2644464 A
- DE 102005018486
- DE 10342865 A1
- DE 102005028787
- DE 10201222862
- US 2012101701 A1
- DE 102008003205 A1